**Europäisches Patentamt**

**European Patent Office**

**Office européen des brevets**

(11) Veröffentlichungsnummer: **0 160 215**
**B1**

(12) **EUROPÄISCHE PATENTSCHRIFT**

(45) Veröffentlichungstag der Patentschrift:
**15.07.87**

(21) Anmeldenummer: **85103626.9**

(22) Anmeldetag: **27.03.85**

(51) Int. Cl.⁴: **H 02 K 49/04,** B 60 T 13/74

(54) Antriebsvorrichtung an einer Permanentmagnetbremse.

(30) Priorität: **19.04.84 CH 1980/84**

(43) Veröffentlichungstag der Anmeldung:
**06.11.85 Patentblatt 85/45**

(45) Bekanntmachung des Hinweises auf die Patenterteilung:
**15.07.87 Patentblatt 87/29**

(84) Benannte Vertragsstaaten:
**AT BE CH DE FR GB IT LI NL SE**

(56) Entgegenhaltungen:
**DE - A - 1 800 616**
**FR - A - 2 120 568**
**FR - A - 2 295 619**
**GB - A - 2 057 610**
**US - A - 3 144 573**

(73) Patentinhaber: **Werkzeugmaschinenfabrik Oerlikon-Bührle AG, Birchstrasse 155, CH-8050 Zürich (CH)**

(72) Erfinder: **Leutwyler, Robert, Regensbergstrasse 41, CH-8113 Boppelsen (CH)**
Erfinder: **Mächler, Georg, Chilenaustrasse 23, CH-8108 Dällikon (CH)**

ACTORUM AG

## Beschreibung

Die Erfindung betrifft eine Antriebsvorrichtung an einer Permanentmagnetbremse, insbesondere für Fahrzeuge, mit Drehpolen, die zwischen Polschuhen angeordnet sind, mit einem Antrieb zum Drehen der Drehpole aus einer ersten Stellung, in der die Bremskraft am grössten ist, in eine zweite Stellung, in der die Bremskraft verschwindet.

Bei einer bekannten Antriebsvorrichtung an einer Permanentmagnetbremse (siehe DE-A-2937968), die dort als schaltbare, dauermagnetische Bremse bezeichnet ist, erfolgt die Verdrehung der Dauermagnetsysteme oder Drehpole von der Ausschalt- in die Einschalt-Stellung oder umgekehrt, mittels eines Zahnringes, der zumindest an seinem inneren Umfang mit einer Verzahnung versehen ist. In die am inneren Umfang des Zahnringes angebrachte Verzahnung greifen als Zahnradsektoren ausgebildete Verstellscheiben ein, die in der Mitte der verdrehbaren Drehpole angebracht sind. Bei einer Drehung des Zahnringes werden daher sämtliche verdrehbaren Dauermagnetsysteme, d.h. Drehpole, von der Ein- in die Ausschaltstellung verdreht. Die Betätigung kann beispielsweise mechanisch, d.h. von Hand, pneumatisch oder hydraulisch erfolgen.

Diese bekannte Antriebsvorrichtung hat den schwerwiegenden Nachteil, dass Zahnräder und Zahnsektoren sehr viel Platz benötigen und daher den Magnetfluss und somit die Funktion der Dauermagnetbremse empfindlich stören.

Die Aufgabe, die mit der vorliegenden Erfindung gelöst werden soll, besteht in der Schaffung einer Antriebsvorrichtung an einer Permanentmagnetbremse, welche die erwähnten Nachteile nicht aufweist, welche weniger Platz benötigt, den Magnetfluss nicht stört und somit die Funktion der Dauermagnetbremse nicht beeinträchtigt. Ausserdem soll die Antriebsvorrichtung zuverlässiger funktionieren und einfacher herzustellen sein als das bekannte Zahnradgetriebe.

Diese Aufgabe wird erfindungsgemäss dadurch gelöst, dass der Antrieb zum Drehen der Drehpole für jeden Drehpol mindestens ein Antriebsband aufweist, das zumindest teilweise um den Drehpol gewickelt ist und das mit mindestens einem Ende an einem beweglichen Betätigungsorgan befestigt ist, zur Übertragung der Bewegung des Betätigungsorganes auf den Drehpol.

Für das Antriebsband wird vorzugsweise antimagnetischer Federstahl verwendet.

Die Vorteile dieser neuen Antriebsvorrichtung sind klar erkenntlich, nämlich ein wesentlich kleinerer Platzbedarf und eine einfachere, billigere Herstellung.

Ausführungsbeispiele der erfindungsgemässen Permanentmagnetbremse, die auch als Retarder bezeichnet wird und die insbesondere für Fahrzeuge geeignet ist, sind im folgenden anhand der beigefügten Zeichnungen ausführlich beschrieben. Es zeigt:

Fig. 1 einen Längsschnitt durch diese Permanentmagnetbremse in Achsrichtung nach Linie I-I in Fig. 2,

Fig. 2 einen Schnitt nach Linie II-II in Fig. 1,

Fig. 3 eine perspektivische Darstellung einer Einzelheit aus Fig. 2, und

Fig. 4 eine weitere perspektivische Darstellung einer Einzelheit aus Fig. 2.

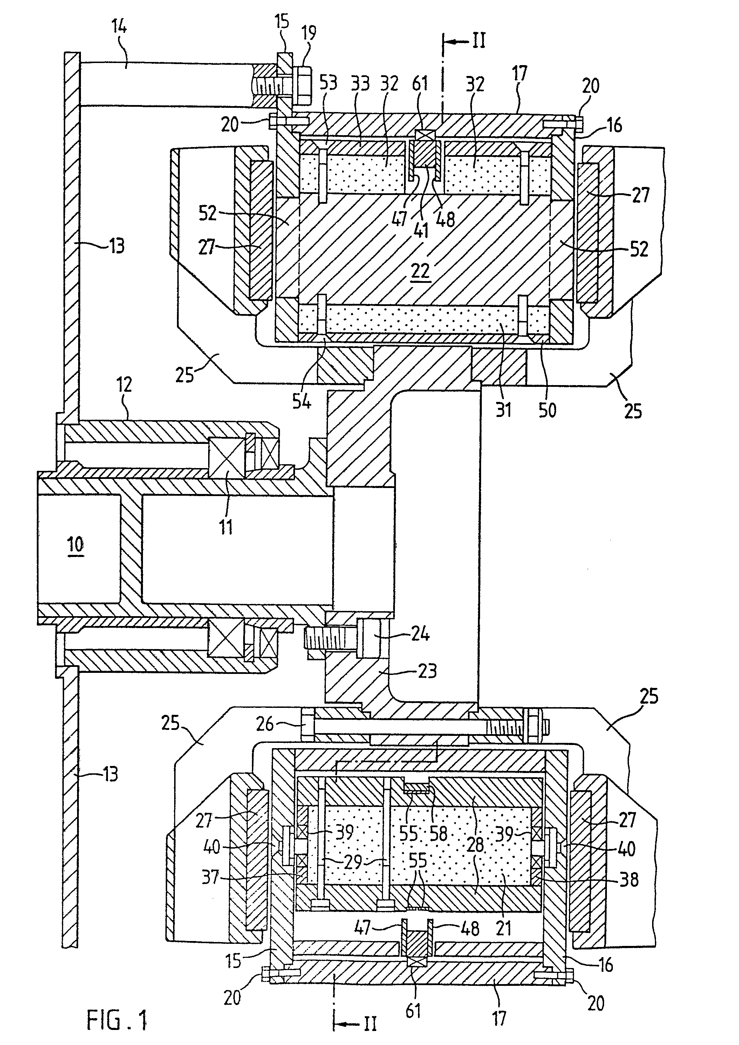

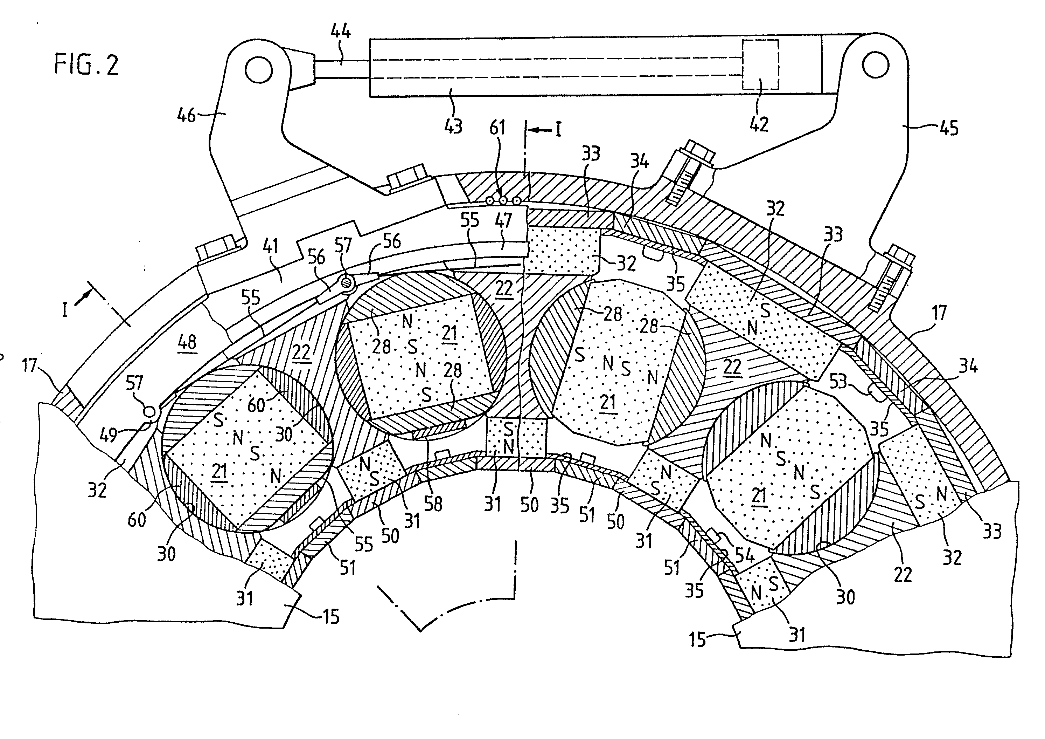

Gemäss Fig. 1 ist auf einem nicht dargestellten Getriebe eines Fahrzeuges eine Nabe 10 befestigt. Auf dieser Nabe 10 ist mit Hilfe eines Rollenlagers 11 eine Hülse 12 drehbar gelagert. An der Hülse 12 ist ein Gehäuse befestigt, das aus einer Scheibe 13, mehreren Bolzen 14 und zwei ringförmigen Scheiben 15, 16 besteht. Die beiden Scheiben 15 und 16 sind durch ein Rohr 17 miteinander verbunden. Die ringförmige Scheibe 15 ist mit Hilfe der Bolzen 14 an der Scheibe 13 befestigt. Die Scheibe 13 ist an der drehbar gelagerten Hülse 12 angeschweisst und die ringförmige Scheibe 15 ist an den Bolzen 14 mit Hilfe von Schrauben 19 befestigt. Die beiden ringförmigen Scheiben 15 und 16 sind mit dem Rohrstück 17 durch Schrauben 20 verbunden. Das Rohrstück 17 bildet zusammen mit den beiden Scheiben 15 und 16 einen ringförmigen Hohlraum, in welchem einerseits drehbar gelagerte Permanentmagnete oder Drehpole 21 und starr befestigte Polschuhe 22 angeordnet sind, wie insbesondere auch aus Fig. 2 ersichtlich ist.

An der sich mit der Getriebewelle drehenden Nabe 10 ist ein Ring 23 mit Hilfe von Schrauben 24 befestigt. Auf diesem Ring 23 sitzt ein zweiteiliger Rotor 25, der mit Hilfe von Schrauben 26 am Ring 23 befestigt ist. Am Rotor 25 sind zwei Wirbelstrombremsscheiben 27 befestigt, welche sich gegenüber den erwähnten, ortsfestdrehbaren Permanentmagneten 21 und den ortsfesten Polstücken 22 drehen.

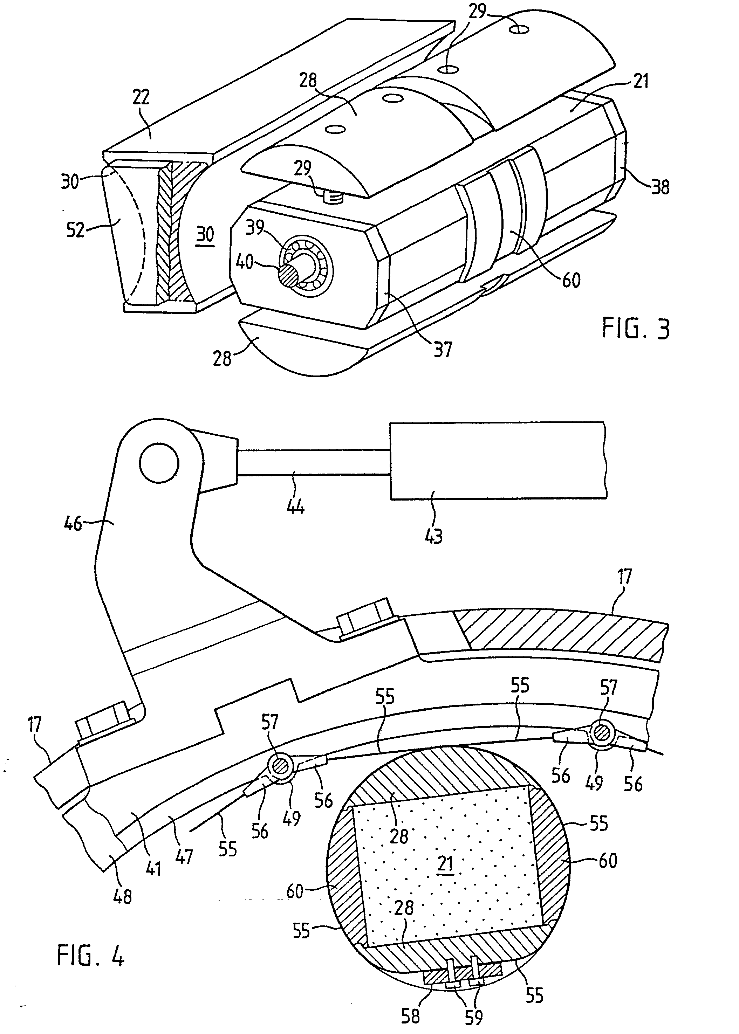

Gemäss Fig. 2 ist zu beiden Seiten der stabförmigen Drehpole 21 je ein im Querschnitt segmentförmiger Polschuh 28 mit Hilfe von vier Schrauben 29 (Fig. 3) befestigt, von denen in Fig. 1 nur zwei dargestellt sind. Die Drehpole oder Permanentmagnete 21 mit ihren Polschuhen 28 sind zwischen je zwei Polschuhen 22 gelagert, welche zu beiden Seiten zwei entsprechende, segmentförmige Aussparungen 30 aufweisen. Die Polschuhe 22 sind zwischen zwei ortsfesten Permanentmagneten 31 und 32 angeordnet. Die inneren ortsfesten Permanentmagnete 31 sind durch Rückschlussplatten 50 (Fig. 1) und die äusseren ortsfesten Permanentmagnete 32 sind durch Rückschlussplatten 33 abgedeckt. Zwischen je zwei benachbarten Rückschlussplatten 33 und 50 ist jeweils ein Keilstück 34 bzw. 51 angeordnet (Fig. 2). An jedem Keilstück 34 bzw. 51 ist eine Blattfeder 35 befestigt, welche sich mit ihren beiden Enden an den benachbarten Rückschlussplatten 33 bzw. 50 abstützt, welche durch Schrauben 53, 54 (Fig. 1) an den Polschuhen 22 befestigt sind.

Die inneren Rückschlussplatten 50 und die äusseren Rückschlussplatten 33 bilden mit den Keilstücken 34 bzw. 51 je einen polygonartigen Ring oder Zylinder, dessen Durchmesser dank der federnden Befestigung der Keilstücke an den Rückschlussplatten 30 bzw. 50 sich so einstellt, dass die Rückschlussplatten 33 bzw. 50 spielfrei an den Permanentmagneten 31 bzw. 32 der Polschuhe 22 anliegen. Ebenso bilden die inneren Permanentmagnete 31 und die äusseren Permanentmagnete 32 je einen polygonartigen Ring.

Zur radialen Lagerung der Drehpole 21 mit ihren Polschuhen 28 in den segmentförmigen Aussparungen 30 der Polschuhe 22 sind an beiden Enden der Drehpole 21 Lagerplatten 37 und 38 angeordnet, in denen sich Kugellager 39 befinden, welche mit Hilfe von Schrauben 40 an den Scheiben 15 und 16 drehbar gehalten sind. Die Drehung der Permanentmagnete oder Drehpole 21 ist notwendig, um die Bremskraft der Magnetbremse einstellen zu können, wie weiter unten erläutert ist.

Gemäss Fig. 1 und 3 weisen die Polschuhe 22 an ihren Enden je einen Nocken 52 auf, der in Aussparungen der Scheiben 15 bzw. 16 hineinragt und an dem sich die Lagerplatten 37 und 38 in axialer Richtung abstützen.

Zum Drehen der Drehpole oder Permanentmagnete 21 dient ein Ring 41 sowie ein Zylinder 43, in dem sich ein Kolben 42 befindet, der an einer Kolbenstange 44 befestigt ist. Der Zylinder 43 ist schwenkbar an einem am Rohr 17 befestigten Halter 45 angelenkt und die Kolbenstange 44 ist schwenkbar an einem am Ring 41 befestigten Halter 46 angelenkt. Der Kolben 42 lässt sich hydraulisch oder pneumatisch im Zylinder 43 verschieben, wodurch auch der Ring 41 sich um seine Achse dreht. Dieser Ring 41 ist mit Hilfe eines Nadellagers 61 im Rohr 17 gelagert und dient gemäss Fig. 4 zum Antrieb der Drehpole 21. Gemäss Fig. 1 und 4 sind zu beiden Seiten des Ringes 41 zwei ringförmige Scheiben 47, 48 befestigt. Diese Scheiben 47 und 48 weisen eine Anzahl Nocken 49 auf, welche mit der Anzahl der Drehpole 21 übereinstimmt. An je zwei benachbarten Nocken 49 sind die beiden Enden eines antimagnetischen Antriebsfederbandes 55 mit Hilfe von Laschen 56 befestigt. Je zwei Laschen 56 sind an einer Achse 57 angelenkt, die in den Nocken 49 der beiden Scheiben 47 und 48 gelagert ist. Jedes Antriebsfederband 55 ist um die Mitte eines der Drehpole 21 geschlungen. Mit Hilfe einer Platte 58 und zweier Schrauben 59 ist das Antriebsfederband 55 am unteren Polschuh 28 des Drehpoles 21 befestigt. Damit der Permanentmagnet 21 durch das Antriebsfederband 55 nicht beschädigt werden kann, sind gemäss Fig. 2 und 3 zwischen den beiden Polschuhen 28 in der Mitte der Drehpole 21 zwei Stützplatten 60 angeordnet, welche verhindern, dass das Antriebsfederband 55 einen Druck auf den Permanentmagnet 21 ausüben kann.

Die Permanentmagnete 21 mit ihren Polschuhen 28 lassen sich aus einer ersten Stellung um 90° drehen. In Fig. 2 sind beide Stellungen gezeigt.

Die Polarisierung der Permanentmagnete 21, 31 und 32 ist aus Fig. 2 ersichtlich, in der an jedem Permanentmagnet die Pole mit N (Nordpol) und S (Südpol) bezeichnet sind. Dabei liegen die beiden ortsfesten Permanentmagnete 31 und 32 abwechselnd mit ihrem Nordpol N oder mit ihrem Südpol S am Polschuh 22 an und bei den drehbaren Permanentmagneten 21 ist abwechselnd der Nordpol N oder der Südpol S nach innen und entsprechend der Südpol S oder der Norpol N radial nach aussen gerichtet. Werden nun sämtliche drehbaren Permanentmagnete 21 um 90° im Gegenuhrzeigersinne gedreht, dann sind gegen einen Polschuh 22 entweder vier Südpole S oder vier Nordpole N gerichtet.

In den beiden gezeigten Stellungen der Permanentmagnete 21 ist entweder keine Bremskraft vorhanden oder sie ist nach einer Drehung um 90° am grössten. Die Bremskraft ist weitgehend von der Grösse der Luftspalten zwischen den Polschuhen 28 der drehbaren Permanentmagnete 21 und den ortsfesten Polstücken oder Polschuhen 22 abhängig.

Die Erfindung ist jedoch nicht auf das bisher beschriebene Ausführungsbeispiel beschränkt.

So können z.B. für jeden Drehpol 21 zwei Antriebsbänder 55 verwendet werden, nämlich eines für jede Drehrichtung, wobei jeweils ein Ende des Antriebsbandes 55 am Betätigungsorgan und das andere Ende des Antriebsbandes am Drehpol 21 befestigt ist.

## Patentansprüche

1. Antriebsvorrichtung an einer Permanentmagnetbremse, insbesondere für Fahrzeuge, mit Drehpolen (21), die zwischen Polschuhen (22) angeordnet sind, mit einem Antrieb zum Drehen der Drehpole (21) aus einer ersten Stellung, in der die Bremskraft am grössten ist, in eine zweite Stellung, in der die Bremskraft verschwindet, dadurch gekennzeichnet, dass der Antrieb zum Drehen der Drehpole (21) für jeden Drehpol (21) mindestens ein Antriebsband (55) aufweist, das zumindest teilweise um den Drehpol (21) gewickelt ist und das mit mindestens einem Ende an einem beweglichen Betätigungsorgan (41, 47, 48) befestigt ist, zur Übertragung der Bewegung des Betätigungsorganes (41, 47, 48) auf den Drehpol (21).

2. Antriebsvorrichtung nach Anspruch 1, dadurch gekennzeichnet, dass das Antriebsband (55) vollständig um den Drehpol (21) gewickelt ist und mit seinen beiden Enden an dem Betätigungsorgan (41, 47, 48) befestigt ist.

3. Antriebsvorrichtung nach Anspruch 2, dadurch gekennzeichnet, dass an jedem Ende des Antriebsbandes (55) eine Lasche (56) befestigt ist, welche um eine Achse (57) schwenkbar an dem Betätigungsorgan (41, 47, 48) angelenkt sind.

4. Antriebsvorrichtung nach Anspruch 3, dadurch gekennzeichnet, dass die Enden von zwei Antriebsbändern (55) für zwei benachbarte Drehpole (21) mit ihren Laschen (56) um eine gemeinsame Achse (57) schwenkbar an dem Betätigungsorgan (41, 47, 48) angelenkt sind.

5. Antriebsvorrichtung nach Anspruch 1, bei welcher die Drehpole (21) auf einem Kreis angeordnet sind und das Betätigungsorgan durch einen Ring (41) gebildet wird, dadurch gekennzeichnet, dass der Ring (41, 47, 48) gleichmässig am Umfang verteilte Nocken (49) aufweist, an denen die Laschen (56) der Antriebsbänder (55) angelenkt sind.

6. Antriebsvorrichtung nach Anspruch 1, dadurch gekennzeichnet, dass das Antriebsband (55) aus antimagnetischem Material besteht.

7. Antriebsvorrichtung nach Anspruch 1, dadurch gekennzeichnet, dass der Antrieb zum Drehen der Drehpole (21) für jeden Drehpol (21) zwei Antriebsbänder (55) aufweist, das nur teilweise um den Drehpol (21) gewickelt ist, das mit nur einem Ende an dem beweglichen Betätigungsorgan (41, 47, 48) befestigt ist und das mit dem anderen Ende am Drehpol (21) befestigt ist, zur Übertragung der Bewegung des Betätigungsorganes (41, 47, 48) auf den Drehpol (21), wobei das eine Antriebsband (55) zur Drehung im einen Drehsinn und das andere Antriebsband (55) zur Drehung im entgegengesetzten Sinne dient.

8. Antriebsvorrichtung nach Anspruch 1, dadurch gekennzeichnet, dass zwischen dem Drehpol (21) und dem Antriebsband (55) Stützplatten (60) angeordnet sind, um den Permanentmagneten vor Druck zu schützen.

## Claims

1. Drive device on a permanent magnet brake, especially for vehicles, with rotatable permanent magnet systems (21) that are located between pole shoes (22) and with a drive for rotating the rotatable permanent magnet systems (21) from a first position, in which the braking force is greatest, into a second position, in which the braking force vanishes, characterized in that the drive for rotating the rotatable permanent magnet systems (21) possesses at least one driving band (55) for each rotatable magnet system (21), each driving band (55) being wrapped at least partly around the rotatable magnet system (21) and being fastened to a movable operating means (41, 47, 48) by at least one end, so as to transmit the movement of the operating means (41, 47, 48) to the rotatable magnet system (21).

2. Drive device according to Claim 1, characterized in that the driving band (55) is wrapped completely around the rotatable permanent magnet system (21), and is fastened to the operating means (41, 47, 48) by both of its ends.

3. Drive device according to Claim 2, characterized in that a link tab (56) is fastened to each end of the driving band (55), each link tab (56) being hinged to the operating means (41, 47, 48) in a manner such that it can pivot about an axis (57).

4. Drive device according to Claim 3, characterized in that the ends of two driving bands (55) for two neighbouring rotatable permanent magnet systems (21) are hinged to the operating means (41, 47, 48) by their link tabs (56), in a manner such that they can pivot about a common axis (57).

5. Drive device according to Claim 1, wherein the rotatable permanent magnet systems (21) are located on a circle, and the operating means is formed by a ring (41), characterized in that the ring (41, 47, 48) exhibits curved protuberances (49) which are uniformly spaced on its periphery, and to which the link tabs (56) associated with the driving bands (55) are hinged.

6. Drive device according to Claim 1, characterized in that the driving band (55) is composed of non-magnetic material.

7. Drive device according to Claim 1, characterized in that the drive for rotating the rotatable permanent magnet systems (21) possesses two driving bands (55) for each rotatable magnet system (21), each driving band (55) being wrapped only partly around the rotatable magnet system (21), being fastened to the movable operating means (41, 47, 48) by one end only, and being fastened to the rotatable magnet system (21) by the other end, so as to transmit the movement of the operating means (41, 47, 48) to the rotatable magnet system (21), one of the driving bands (55) serving to cause rotation in one direction, and the other serving to cause rotation in the opposite direction.

8. Drive device according to Claim 1, characterized in that supporting plates (60) are located between the rotatable permanent magnet system (21) and the driving band (55), in order to protect the permanent magnet from pressure.

## Revendications

1. Dispositif d'entraînement pour un frein à aimants permanents notamment pour des véhicules à moteur, dispositif comportant des pôles tournants (21) placés entre des patins polaires (22) et un moyen d'entraînement pour faire tourner les pôles tournants (21) d'une première position dans laquelle la force de freinage est la plus importante vers une deuxième position dans laquelle la force de freinage disparaît, dispositif caractérisé en ce que l'entraînement pour faire tourner les pôles tournants (21) pour chaque pôle tournant (21) comprend au moins une bande d'entraînement (55) qui entoure au moins partiellement le pôle tournant (21) et en ce qu'au moins une extrémité de la bande est fixée à un organe de manœuvre (41, 47, 48) mobile pour transmettre le mouvement de l'organe de manœuvre (41, 47, 48) au pôle tournant (21).

2. Dispositif d'entraînement selon la revendication 1, caractérisé en ce que la bande d'entraînement (55) entoure complètement le pôle tournant (2) et ses deux extrémités sont fixées à l'organe de manœuvre (41, 47, 48).

3. Dispositif d'entraînement selon la revendication 2, caractérisé en ce qu'à chaque extrémité de la bande d'entraînement (55), on a fixé une patte (56), ces pattes étant articulées à un organe de manœuvre (41, 47, 48) pivotant autour d'un axe (57).

4. Dispositif d'entraînement selon la revendication 3, caractérisé en ce que les extrémités de deux bandes d'entraînement (55) pour deux pôles tournants (21) voisins sont articulées par leurs pattes (56) autour d'un axe commun (57) de manière pivotante sur l'organe de manœuvre (41, 47, 48).

5. Dispositif d'entraînement selon la revendication 1, dans lequel les pôles tournants (21) sont répartis sur un cercle et dont l'organe de manœuvre est formé par un anneau (41), dispositif caractérisé en ce que l'anneau (41, 47, 48) comporte des cames (49) réparties régulièrement à sa périphérie, cames auxquelles sont articulées les pattes (56) des bandes d'entraînement (55).

6. Dispositif d'entraînement selon la revendication 1, caractérisé en ce que la bande d'entraînement (55) est en un matériau antimagnétique.

7. Dispositif d'entraînement selon la revendication 1, caractérisé en ce que le moyen d'entraînement pour faire tourner les pôles tournants (21) pour chaque pôle tournant (21) se compose de deux bandes d'entraînement (55) qui n'entourent que partiellement le pôle tournant (21), moyen qui n'est fixé que par une extrémité à l'organe de manœuvre mobile (41, 47, 48), l'autre extrémité étant fixée à un pôle (21) pour transmettre le mouvement de l'organe de manoeuvre (41, 47, 48) au pôle tournant (21), une bande d'entraînement (55) servant à faire tourner dans un sens de rotation et l'autre bande d'entraînement (55) servant à faire tourner dans le sens de rotation opposé.

8. Dispositif d'entraînement selon la revendication 1, caractérisé par des plaques d'appui (60) prévues entre le pôle tournant (22) et la bande d'entraînement (55), plaques qui protègent les aimants permanents contre la pression.

FIG . 1

FIG. 2

0 160 215

FIG. 3

FIG. 4